# EUROPEAN PATENT SPECIFICATION

(11) **EP 3 099 915 B1**
(45) Date of publication and mention of the grant of the patent: **06.03.2024**
(21) Application number: 15702818.4
(22) Date of filing: 22.01.2015
(51) Int. Cl.: F02D 41/22, F02D 41/30, F02D 19/06, F02D 19/10, F02D 41/00, F02B 3/06

(54) **METHOD AND FUEL INJECTION SYSTEM FOR A DUAL-FUEL DIESEL ENGINE**
VERFAHREN UND KRAFTSTOFFEINSPRITZSYSTEM FÜR EINEN ZWEISTOFF-DIESELMOTOR
PROCÉDÉ, SYSTÈME DE COMMANDE ET SYSTÈME D'INJECTION DE CARBURANT POUR MOTEUR DIESEL À DEUX CARBURANTS

(30) Priority: 28.01.2014 FI 20145093
(43) Date of publication of application: 07.12.2016
(73) Proprietor: Wärtsilä Finland Oy, 65170 Vaasa (FI)
(72) Inventor: ÖSTMAN, Fredrik, FI-65100 Vaasa (FI); RÖSGREN, Jonatan, FI-65100 Vaasa (FI); BERGROTH, Thomas, FI-65100 Vaasa (FI)
(74) Representative: Berggren Oy
(86) International application number: PCT/FI2015/050035
(87) International publication number: WO 2015/114208

(56) References cited:
- EP-A1- 2 634 401
- EP-A2- 1 586 758
- EP-A2- 2 487 353
- WO-A1-2012/072881
- WO-A2-2012/155030

## Description

### TECHNICAL FIELD

The invention concerns in general the technology of dual-fuel diesel engines that may burn both liquid and gaseous fuel. In particular the invention concerns the way in which the injection of the various fuels into cylinders of the engine is implemented and controlled in exceptional situations like injector failures.

### BACKGROUND OF THE INVENTION

A dual-fuel diesel engine may use both liquid fuel, such as fuel oil, and gaseous fuel, such as natural gas. Ensuring reliable operation of the engine requires that some precautions are made for exceptional situations in which normal injection of either the gaseous fuel or the liquid fuel into a cylinder does not work.

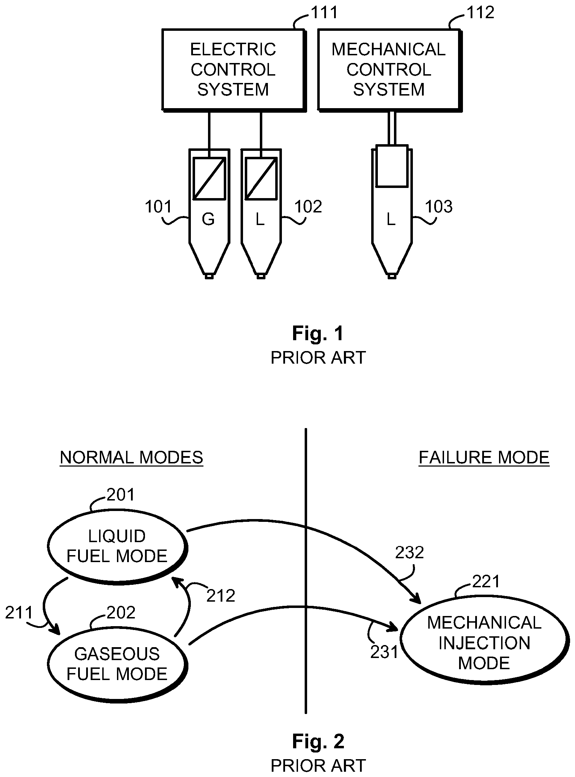

Fig. 1 illustrates schematically a prior art fuel injection system for one cylinder of a dual-fuel diesel engine. Gaseous fuel can be injected into the cylinder through an electrically controlled gaseous fuel injector (or valve) 101. Liquid fuel can be injected into the cylinder through either an electrically controlled liquid fuel injector 102 or a mechanically controlled liquid fuel injector 103. An electric control system 111 is coupled to control the electrically controlled injectors 101 and 102. A mechanical control system 112 controls the operation of the mechanically controlled injector 103. The letters G and L represent gaseous and liquid fuel respectively in fig. 1. Prior art fuel injection systems are disclosed e.g. in EP1586758A2 and EP2634401A1.

Fig. 2 illustrates the operation of a dual-fuel diesel engine equipped with a prior art fuel injection system of the kind shown in fig. 1. Normal operating modes of the engine are a liquid fuel mode 201 and a gaseous fuel mode 202. The engine is in the liquid fuel mode 201 when the electrically and mechanically controlled liquid fuel injector 102, 103 operates normally and only liquid fuel is injected into the cylinder in each operating cycle. The gaseous fuel mode 202 may be a pure gaseous fuel mode, in which all mechanical energy that the engine produces comes from burning gaseous fuel, or a mixed mode in which the engine produces mechanical energy by burning both gaseous and liquid fuel. For this reason the gaseous fuel mode 202 could also be called a dual-fuel mode. A small amount of liquid fuel, known as the pilot, is injected into the cylinder even in the pure gaseous fuel mode for igniting the gaseous fuel, but the pilot should not be confused with an amount of liquid fuel that is used to actually produce mechanical energy during a mixed mode.

The arrow 211 represents a transfer from liquid fuel mode 201 to gaseous fuel mode 202. A transfer is a relatively slow change of mode, characterized by the injection of fuel taking place normally. The other possible change of mode is a trip, which is a rapid reaction to abnormal conditions such as a failing injector. Changing from the gaseous fuel mode 202 to the liquid fuel mode 201 according to arrow 212 make take place as a so-called gas trip, meaning that the injection of gaseous fuel is not working properly and it is therefore rapidly shut down. A trip from the gaseous fuel mode 202 to the liquid fuel mode 201 could be triggered also by e.g. serious knocking that reflected the limited ability of the fuel injection control to react to a rapidly and/or repeatedly changing load.

The mechanical injection mode 221 constitutes a failure mode, which is employed when operation in liquid fuel mode 201 or gaseous fuel mode 202 is not possible. The arrow 231 represents a so-called pilot trip. It means that a failure has prevented the pilot injection of liquid fuel in the gaseous mode 202, and therefore both electrically controlled injectors 101 and 102 are unusable (no gaseous fuel should be injected into the cylinder without the pilot, because it would not ignite properly). The arrow 232 represents a trip from the liquid fuel mode 201 to the mechanical injection mode 221. It means that the electrically controlled injector 102 has become inoperable, so only mechanically controlled injection can be performed.

Although mechanical injection control is robust and reliable, electric injection control is far more accurate and constitutes an absolute prerequisite for proper long-term operation of a modern dual-fuel diesel engine. The mechanical injection mode 221 is thus strictly a failure mode. In many cases it can only be used to operate the engine long enough to arrange a safe and controlled shutdown.

### SUMMARY OF THE INVENTION

The following presents a simplified summary in order to provide a basic understanding of some aspects of various invention embodiments. The summary is not an extensive overview of the invention. It is neither intended to identify key or critical elements of the invention nor to delineate the scope of the invention. The following summary presents the invention in a simplified form as a prelude to a more detailed description of exemplifying embodiments of the invention.

A method, control system, and fuel injection system for a dual-fuel diesel engine would be needed that would enable flexible, yet reliable dual-fuel operation of the engine under both normal and exceptional circumstances. Structural solutions in and around the cylinder head should be made simple, easy to manufacture, and straightforward to service and maintain.

Advantageous objectives of the invention are achieved by equipping the cylinder of a dual-fuel diesel engine with two electrically controlled liquid fuel injectors, each operating under its own electric control system so that even a fault in one electric control system still leaves the other fully operable. One of the two electric control systems may be the one that simultaneously controls an electrically controlled gas injector of the same cylinder. Whichever of the independently controlled liquid fuel injectors can be used as a pilot injector for igniting gaseous fuel. Advantageous objectives of the invention are achieved by equipping the cylinder of a dual-fuel diesel engine. Advantageous objectives of the invention are achieved by equipping the cylinder of a dual-fuel reciprocating piston engine.

The provision of two electrically controlled liquid fuel injectors makes is possible to operate the dual-fuel engine in a gaseous fuel backup mode, in which pilot injection to the cylinder is performed through the other electrically controlled liquid fuel injector than the one through which pilot injection is performed in the normal gaseous fuel mode. In a normal liquid fuel mode, typically both electrically controlled liquid fuel injectors are used. Liquid fuel backup modes are possible, in which only one of the two electrically controlled liquid fuel injectors injects fuel into the cylinder.

Transitions between modes can take the form of a transfer or a trip. As a significant difference to the mechanical injection mode or failure mode explained earlier, the backup modes may offer equally accurate control over the operation of the engine as the normal modes. They may also be recoverable, meaning that a transition from a backup mode to a normal mode may occur. Since the normal liquid fuel mode is typically more stable than the normal gaseous fuel mode, a recovery that begins from a gaseous fuel backup mode or liquid fuel backup mode, and eventually ends in the normal gaseous fuel mode, may take place through the normal liquid fuel mode.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF DRAWINGS

Fig. 1 illustrates a prior art fuel injection system,
fig. 2 illustrates operating modes of a prior art dual-fuel diesel engine,
fig. 3 illustrates a fuel injection system according to an embodiment of the invention, and
fig. 4 illustrates operating modes of a dual-fuel diesel engine according to an embodiment of the invention.

### DETAILED DESCRIPTION OF EMBODIMENTS OF THE INVENTION

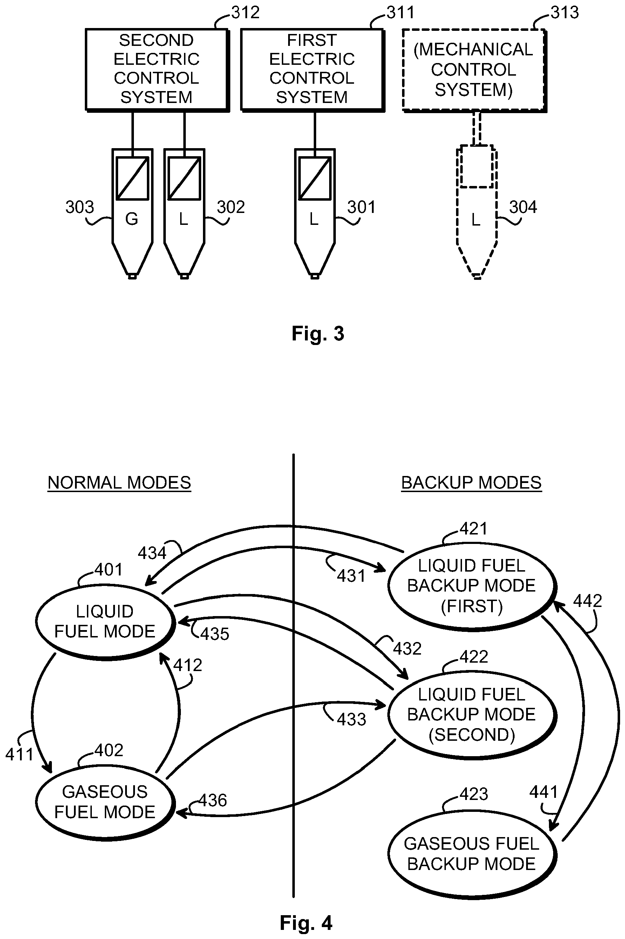

Fig. 3 illustrates schematically a fuel injection system, a part of which is the fuel injection control system. These system is meant for use in a dual-fuel diesel engine, and since the systems are essentially identical from cylinder to cylinder, it is sufficient to discuss here the fuel injection system and fuel injection control system for one cylinder of the engine.

A first electric control system 311 is configured to control the operation of a first liquid fuel injector 301, which is an electrically controlled injector. A second electric control system 312 is configured to control the operation of a second liquid fuel injector 302, which is also an electrically controlled injector. The first and second electric control systems 311 and 312 may be called CCMs, or cylinder control modules. They are functionally independent of each other in the sense that the correct operation of one of them does not depend on the correct operation of the other; in other words each of the first and second electric control systems 311 and 312 may continue operating normally even if the other fails or does not operate normally. Thus the first and second electric control systems 311 and 312 may be called redundant electric control systems.

The fuel injection system comprises also a gaseous fuel injector 303, which is electrically controlled like the first and second liquid fuel injectors 301 and 302. Technically the delivery of gaseous fuel to the cylinder of a dual-fuel diesel engine is a slightly different task than the delivery of liquid fuel, for which purpose the gaseous fuel injector 303 could also be called a gaseous fuel valve. For brevity, and since the present invention is relatively insensitive to the technical way in which the fuels actually enter the cylinder, we use the designation "gaseous fuel injector" to describe all devices that are built for controllably delivering gaseous fuel into the cylinder, and the verb "to inject" to describe all instances of making the gaseous fuel enter the cylinder. This can be done for example so that gas is supplied to cylinders via common pipe running along the engine, continuing with individual feed pipes to each cylinder or by a direct gas injection system, such as disclosed in patent application FI955900A.

In the embodiment of fig. 3 we assume that the gaseous fuel injector 303 and the second liquid fuel injector 302 are coupled under the same control module, which is the second electric control system 312. The words "first" and "second" are just names, so technically it would be completely equal to say that the gaseous fuel injector and a first liquid fuel injector operated under a first electric control system, and a second liquid fuel injector operated under a second electric control system. An alternative embodiment could be such where each of the fuel injectors 301, 302, and 303 were coupled under a respective one of three parallel, mutually independent electric control systems.

The fuel injection system could comprise a mechanically controlled liquid fuel injector 304 and a mechanical control system 313, but the structure of the system and its technical implementation can be made considerably simpler if such a mechanical injection subsystem is left out completely. Significant advantages can be achieved by building the electrically controlled parts so that all necessary backup functions and reserve modes can be implemented with the elements shown as 301, 302, 303, 311, and 312 in fig. 3.

Operating the engine in a gaseous fuel mode comprises injecting gaseous fuel into the cylinder. It also comprises performing pilot injection to the cylinder through an electrically controlled liquid fuel injector. Since the gaseous fuel injector 303 and the second liquid fuel injector 302 operate under a common control system, we may assume that the pilot injection to the cylinder is made through the second liquid fuel injector 302 in a normal gaseous fuel mode. In a case of a failure in the pilot injection through the second liquid fuel injector 302, a gaseous fuel backup mode can be employed in which pilot injection to the cylinder is performed through the first liquid fuel injector 301. As an alternative embodiment, the pilot injection to the cylinder can be made through the first liquid fuel injector 301 in a normal gaseous fuel mode, and through the second liquid fuel injector 302 in the gaseous fuel backup mode.

Fig. 4 illustrates some aspects of a method according to an embodiment of the invention in the form of a mode diagram. Normal operating modes comprise a liquid fuel mode 401 and a gaseous fuel mode 402, of which the lastmentioned may be a pure gaseous fuel mode or a mixed mode. The liquid fuel mode 401 comprises injecting liquid fuel into the cylinder through both the first liquid fuel injector 301 and the second liquid fuel injector 302. The proportions in which liquid fuel is injected through each of them may vary. The downward arrow represents performing a transfer 411 into the gaseous fuel mode 402 from the liquid fuel mode. Such a transfer 411 may follow e.g. a startup phase in which the engine is first started on liquid fuel only, or the transfer 411 may take place under some other circumstances when the operator of the engine considers it desirable to burn gaseous fuel. For clarity it is mentioned that startups are not necessarily always made with liquid fuel; it is possible to start a dual-fuel diesel engine immediately into gaseous fuel mode.

The upward arrow represents switching 412 from the gaseous fuel mode 402 to the liquid fuel mode 401. The switching 412 may take e.g. the form of a trip, so that as a response to a failure in the injection of gaseous fuel into the cylinder while in the gaseous fuel mode 402, switching 412 to the liquid fuel mode 401 rapidly occurs. A failure should be understood in a wide sense to include e.g. dynamic load conditions under which accurate operation of the engine in gaseous fuel mode becomes impossible, even if there would be technically nothing extraordinary in the fuel injection system. In that case the expression "failure in the injection of gaseous fuel" means a failure to control the injection of gaseous fuel as accurately as would be needed. It is also possible to perform the switching 412 more smoothly in the form of a transfer, for example when gaseous fuel is about to run out and continued operation of the engine is thus only possible in the liquid fuel mode 401.

As a response to a failure in the injection of liquid or gaseous fuel into the cylinder the method comprises switching to a liquid fuel backup mode, of which there are two in the mode diagram of fig. 4. A liquid fuel backup mode in general means a mode in which only liquid fuel is injected into the cylinder, and only through one of the first 301 and second 302 liquid fuel injectors. In order to differentiate between the two we may say that the first liquid fuel backup mode 421 comprises injecting liquid fuel into the cylinder of the diesel engine through the first liquid fuel injector 301. Similarly the second liquid fuel backup mode 422 comprises injecting liquid fuel into the cylinder of the diesel engine through the second liquid fuel injector 302.

Remembering that the (normal) liquid fuel mode 401 comprises injecting liquid fuel into the cylinder through both the first liquid fuel injector 301 and the second liquid fuel injector 302, it is intuitive that the method may comprise switching 431 from the (normal) liquid fuel mode 401 to the first liquid fuel backup mode 421 or switching 432 from the (normal) liquid fuel mode 401 to the second liquid fuel backup mode 422. These changes of mode correspond to discontinuing the injection through the second 302 or first 301 liquid fuel injector respectively.

Earlier it was assumed that as a first assumption the (normal) gaseous fuel mode 402 comprises performing pilot injection to the cylinder through the second liquid fuel injector 302. Therefore if some unexpected conditions like failure in the injection of gaseous fuel cause switching to a liquid fuel backup mode, it means most probably switching 433 to the second liquid fuel backup mode 422 by discontinuing the injection through the gaseous fuel injector 303.

When the execution of the method has brought the system to the first liquid fuel backup mode 421, it is possible that the reason was a failure in the injection of liquid fuel through the second liquid fuel injector 302, the failure being of a kind that does not as such affect the operation of the gaseous fuel injector 303. Therefore, as one possibility, the method may comprise performing a transfer 441 from the first liquid fuel backup mode 421 into the gaseous fuel backup mode 423, in which gaseous fuel is injected into the cylinder of the diesel engine, but pilot injection to the cylinder is performed through the first liquid fuel injector 301 and not through the second liquid fuel injector 302 as in the (normal) gaseous fuel mode 402. As a response to a failure in the injection of gaseous fuel into the cylinder while in the gaseous fuel backup mode 423, the method may comprise switching 442 back to the first liquid fuel backup mode 421.

Fig. 4 illustrates three changes of mode that have the nature of a recovery, i.e. switching from a backup mode to a normal mode. Since a recovery from a backup mode is only feasible if it can be sure that all aspects of fuel injection operate normally and are under complete control, it is reasonable to assume that switching 434 from the first liquid fuel backup mode 421 to the (normal) liquid fuel mode 401, or switching 435 from the second liquid fuel backup mode 422 to the (normal) liquid fuel mode 401, or switching 436 from the second liquid fuel backup mode to the (normal) gaseous fuel mode 402 all take the form of a transfer and not a trip.

Liquid fuel modes are by nature somewhat more stable and somewhat easier to control than gaseous fuel modes. Therefore, even if it is possible to perform a recovery directly to the gaseous fuel mode 402, for example as illustrated as 436 in fig. 4, an advantageous embodiment of the invention involves making a recovery from the gaseous fuel backup mode 423 or from one of the liquid fuel backup modes 421 or 422 to the gaseous fuel mode 402 through the liquid fuel mode 401. The method may comprise first switching 442 from the gaseous fuel backup mode 423 to the first liquid fuel backup mode 421, then switching 434 from the liquid fuel backup mode 421 to the (normal) liquid fuel mode 401, and finally switching 411 from the liquid fuel mode 401 to the gaseous fuel mode 402. If the starting point for the recovery was the first liquid fuel backup mode 421, the procedure is the same as above, only leaving out its initial transfer 442. As an alternative to the direct recovery 436 the method may comprise switching 435 from the second liquid fuel backup mode 422 to the (normal) liquid fuel mode 401 and only thereafter switching 411 from the liquid fuel mode 401 to the gaseous fuel mode 402.

In order to be able to realize the modes and changes of mode described above, the first 311 and second 312 electric control systems are both configured for selectively performing pilot injection through the respective liquid fuel injector 301 or 302 into the same cylinder during the operation of the diesel engine in a dual-fuel mode 402 or 423 that comprises injecting gaseous fuel to the cylinder. An electric control system is essentially a programmable circuit provided with machine-readable instructions that, when executed by a processor, cause the implementation of the appropriate control method. A CCM, or cylinder control module, is an electric control system that takes control commands as inputs, and that electrically drives the solenoids or other actuators that cause the injectors and/or valves to open and close. Configuring such an electric control system to perform e.g. pilot injection means providing the electric control system with an output connection for an appropriate electrically controlled liquid fuel injector, and programming the electric control system with machine-readable instructions for pilot injection. If one of the electric control systems has both a liquid fuel injector and a gaseous fuel injector at its disposal, like the second electric control system 312 in fig. 3, it is additionally configured to control the operation of the gaseous fuel injector during the operation of said diesel engine in a dual-fuel mode, by providing the electric control system with an output connection for an appropriate electrically controlled gaseous fuel injector, and programming the electric control system with machine-readable instructions for gaseous fuel injection.

Above we have assumed that the electric control systems 311 and 312 may be compared with the concept of a CCM (cylinder control module), so that for a dual-fuel diesel engine with a particular number of cylinders there would be twice as many electric control systems, two for each cylinder. The provision of cylinder-specific electric control systems involves the advantage that the modes and mode changes illustrated in fig. 4 can be made in each cylinder independently of the other cylinders. It also involves the advantage that even if a simultaneous failure would occur in both the first and the second electric control systems, making only the use of mechanical injection control (if installed) possible, this would only affect one of the cylinders in the engine. The change of the mode can be done for example on abnormal conditions and faults states, such as if excessive knock occurs.

## Claims

1. A method for controlling a dual-fuel diesel engine, comprising:
- using a first electric control system (311) to control the injection of liquid fuel into a cylinder of said diesel engine through a first liquid fuel injector (301),
- using a second electric control system (312) to control the injection of liquid fuel into said cylinder of said diesel engine through a second liquid fuel injector (302), different from said first liquid fuel injector (301),
- in a gaseous fuel mode (402), injecting gaseous fuel into said cylinder of said diesel engine and performing pilot injection to said cylinder through said second liquid fuel injector (302), and
- in a case of a failure in the pilot injection through said second liquid fuel injector (302), employing a gaseous fuel backup mode (423) in which pilot injection to said cylinder is performed through said first liquid fuel injector (301),
**characterized in that** said first (311) and second (312) electric control systems are mutually redundant electric control systems that are functionally independent of each other.

2. A method according to claim 1, comprising:
- as a response to a failure in the injection of liquid or gaseous fuel into said cylinder, switching (431, 432, 433) to a liquid fuel backup mode (421, 422) in which only liquid fuel is injected into said cylinder, and only through one of the first (301) and second (302) liquid fuel injectors.

3. A method according to claim 2, wherein:
- said liquid fuel backup mode is a first liquid fuel backup mode (421) that comprises injecting liquid fuel into said cylinder of said diesel engine through said first liquid fuel injector (301), and
- the method comprises performing a transfer (441) from said first liquid fuel backup mode (421) into said gaseous fuel backup mode (423).

4. A method according to claim 3, comprising:
- as a response to a failure in the injection of gaseous fuel into said cylinder while in said gaseous fuel backup mode (423), switching (442) to said first liquid fuel backup mode (421).

5. A method according to any of the previous claims, comprising:
- performing a transfer (411) into said gaseous fuel mode (402) from a liquid fuel mode (401), which comprises injecting liquid fuel into said cylinder through both said first liquid fuel injector (301) and said second liquid fuel injector (302).

6. A method according to claim 5, wherein a recovery from a gaseous fuel backup mode (423) or liquid fuel backup mode (421, 422) to the gaseous fuel mode takes place through said liquid fuel mode (401).

7. A method according to claim 5 or 6, comprising:
- as a response to a failure in the injection of gaseous fuel into said cylinder while in said gaseous fuel mode (402), switching (412) to said liquid fuel mode (401).

8. A fuel injection control system for a dual-fuel diesel engine, comprising:
- a first electric control system (311) configured to control the operation of a first liquid fuel injector (301), and
- a second electric control system (312) configured to control the operation of a second liquid fuel injector (302);
wherein said first (311) and second (312) electric control systems are both configured for selectively performing pilot injection through the respective liquid fuel injector (301, 302) into the same cylinder during the operation of said diesel engine in a dual-fuel mode (402, 423) that comprises injecting gaseous fuel to said cylinder,
**characterized in that** said first (311) and second (312) electric control systems are mutually redundant electric control systems that are functionally independent of each other.

9. A fuel injection control system according to claim 8, wherein said second electric control system (312) is also configured to control the operation of a gaseous fuel injector (303) during the operation of said diesel engine in said dual-fuel mode (402, 423).

10. A fuel injection system for a dual-fuel diesel engine, comprising:
- a first liquid fuel injector (301) and a second liquid fuel injector (302), both configured to inject liquid fuel into the same cylinder,
- a gaseous fuel injector (303) configured to inject gaseous fuel into the same cylinder as said first (301) and second (302) liquid fuel injectors, and
- a fuel injection control system according to any of claims 8 or 9, coupled to control said first (301) and second (302) liquid fuel injectors and said gaseous fuel injector (303).

## Patentansprüche

1. Das Verfahren zur Steuerung eines Zweistoff-Dieselmotors umfassend:
- die Verwendung eines ersten elektrischen Steuersystems (311) zur Steuerung der Einspritzung des flüssigen Kraftstoffs in einen Zylinder des genannten Dieselmotors durch eine erste Flüssigkraftstoffeinspritzdüse (301),
- Verwendung eines zweiten elektrischen Steuersystems (312) zur Steuerung der Einspritzung des flüssigen Kraftstoffs in den genannten Zylinder des Dieselmotors durch eine zweite Flüssigkraftstoffeinspritzdüse (302), die sich von der ersten Flüssigkraftstoffeinspritzdüse (301) unterscheidet,
- in einem Gaskraftstoff-Modus (402), die Einspritzung des Gaskraftstoffes in den genannten Zylinder des genannten Dieselmotors und die Durchführung der Voreinspritzung in den genannten Zylinder durch die zweite Flüssigkraftstoffeinspritzdüse (302), und
- im Störungsfall der Voreinspritzung durch die genannte zweite Flüssigkraftstoffeinspritzdüse (302) einen Gaskraftstoff-Backup-Modus (423) verwendet, in dem die Voreinspritzung in den genannten Zylinder durch die genannte erste Flüssigkraftstoffeinspritzdüse (301) durchgeführt wird,
**dadurch gekennzeichnet, dass** das genannte erste (311) und das zweite (312) elektrische Steuersystem gegenseitig redundante elektrische Steuersysteme sind, die funktionell unabhängig voneinander sind.

2. Das Verfahren nach Anspruch 1, umfassend:
- als Reaktion auf eine Störung bei der Einspritzung des Flüssig- oder Gaskraftstoffs in den genannten Zylinder, die Umschaltung (431, 432, 433) auf einen Flüssigkraftstoff-Backup-Modus (421, 422), in dem nur flüssiger Kraftstoff in den genannten Zylinder eingespritzt wird, und zwar nur durch eine der ersten (301) und zweiten (302) Flüssigkraftstoffeinspritzdüsen.

3. Das Verfahren nach Anspruch 2, wobei:
- der genannte Flüssigkraftstoff-Backup-Modus ein erster Flüssigkraftstoff-Backup-Modus (421) ist, der die Einspritzung eines flüssigen Kraftstoffs in den genannten Zylinder des genannten Dieselmotors durch die genannte erste Flüssigkraftstoffeinspritzdüse (301) umfasst, und
- das Verfahren die Vornahme eines Transfers (441) von dem genannten ersten Flüssigkraftstoff-Backup-Modus (421) in den genannten Gaskraftstoff-Backup-Modus (423) umfasst.

4. Das Verfahren nach Anspruch 3, umfassend:
- als Reaktion auf eine Störung bei der Einspritzung des Gaskraftstoffs in den genannten Zylinder, während er sich in dem genannten Gaskraftstoff-Backup-Modus (423) befindet, die Umschaltung (442) auf den genannten ersten Flüssigkraftstoff-Backup-Modus (421).

5. Ein Verfahren nach einem der vorangehenden Ansprüche, umfassend:
- die Vornahme eines Transfers (411) in den genannten Gaskraftstoff-Modus (402) aus einem Flüssigkraftstoff-Modus (401), der die Einspritzung des Flüssigkraftstoffs in den genannten Zylinder durch sowohl die genannte erste Flüssigkraftstoffeinspritzdüse (301) als auch die genannte zweite Flüssigkraftstoffeinspritzdüse (302) umfasst.

6. Verfahren nach Anspruch 5, bei dem eine Rückgewinnung von einem Gaskraftstoff-Backup-Modus (423) oder einem Flüssigkraftstoff-Backup-Modus (421, 422) in den Gaskraftstoff-Modus durch den genannten Flüssigkraftstoff-Modus (401) erfolgt.

7. Das Verfahren nach Anspruch 5 oder 6, umfassend:
- als Reaktion auf eine Störung bei der Einspritzung des Gaskraftstoffs in den genannten Zylinder, während er sich in dem genannten Gaskraftstoff-Modus (402) befindet, die Umschaltung (412) auf den genannten Flüssigkraftstoff-Modus (401).

8. Ein Kraftstoffeinspritzsteuerungssystem für einen Zweistoff-Dieselmotor, umfassend:
- ein erstes elektrisches Steuersystem (311), das so konfiguriert ist, dass es den Betrieb einer ersten Flüssigkraftstoffeinspritzdüse (301) steuert, und
- ein zweites elektrisches Steuersystem (312), das so konfiguriert ist, dass es den Betrieb einer zweiten Flüssigkraftstoffeinspritzdüse (302) steuert;
wobei das genannte erste (311) und das zweite (312) elektrische Steuersystem so konfiguriert sind, dass sie selektiv eine Voreinspritzung durch die jeweilige Flüssigkraftstoffeinspritzdüse (301, 302) in denselben Zylinder während des Betriebs des Dieselmotors in einem Zweikraftstoffmodus (402, 423) durchführen, der die Einspritzung eines Gaskraftstoffs in den genannten Zylinder umfasst,
**dadurch gekennzeichnet, dass** das genannte erste (311) und das zweite (312) elektrische Steuersystem gegenseitig redundante elektrische Steuersysteme sind, die funktionell unabhängig voneinander sind.

9. Ein Kraftstoffeinspritzsteuerungssystem nach Anspruch 8, wobei das genannte zweite elektrische Steuerungssystem (312) auch so konfiguriert ist, dass es den Betrieb einer Gaskraftstoffeinspritzdüse (303) während des Betriebs des genannten Dieselmotors im Zweistoffbetrieb (402, 423) steuert.

10. Ein Kraftstoffeinspritzsystem für einen Zweistoff-Dieselmotor, umfassend:
- eine erste Flüssigkraftstoffeinspritzdüse (301) und eine zweite Flüssigkraftstoffeinspritzdüse (302), die so konfiguriert sind, dass sie Flüssigkraftstoff in denselben Zylinder einspritzen,
- eine Gaskraftstoffeinspritzdüse (303), die so konfiguriert ist, dass sie den Gaskraftstoff in denselben Zylinder einspritzt wie die genannte erste (301) und zweite (302) Flüssigkraftstoffeinspritzdüse, und
- ein Kraftstoffeinspritzsteuerungssystem nach einem der Ansprüche 8 oder 9, das so gekoppelt ist, dass es die genannte erste (301) und zweite (302) Flüssigkraftstoffeinspritzdüse und die genannte Gaskraftstoffeinspritzdüse (303) steuert.

## Revendications

1. Procédé de commande d'un moteur diesel bicarburant, comprenant :
- l'utilisation d'un premier système de commande électrique (311) pour commander l'injection de carburant liquide dans un cylindre dudit moteur diesel via un premier injecteur de carburant liquide (301),
- l'utilisation d'un second système de commande électrique (312) pour commander l'injection de carburant liquide dans ledit cylindre dudit moteur diesel via un second injecteur de carburant liquide (302), différent dudit premier injecteur de carburant liquide (301),
- dans un mode carburant gazeux (402), l'injection de carburant gazeux dans ledit cylindre dudit moteur diesel et le fait d'effectuer une injection pilote audit cylindre via ledit second injecteur de carburant liquide (302), et
- en cas de défaillance de l'injection pilote via ledit second injecteur de carburant liquide (302), l'emploi d'un mode de secours à carburant gazeux (423) dans lequel l'injection pilote audit cylindre est effectuée via ledit premier injecteur de carburant liquide (301),
**caractérisé en ce que** lesdits premier (311) et second (312) systèmes de commande électrique sont des systèmes de commande électrique mutuellement redondants qui sont fonctionnellement indépendants l'un de l'autre.

2. Procédé selon la revendication 1, comprenant :
- en réponse à une défaillance de l'injection de carburant liquide ou gazeux dans ledit cylindre, le passage (431, 432, 433) à un mode de secours à carburant liquide (421, 422) dans lequel seul du carburant liquide est injecté dans ledit cylindre, et uniquement via l'un des premier (301) et second (302) injecteurs de carburant liquide.

3. Procédé selon la revendication 2, dans lequel :
- ledit mode de secours à carburant liquide est un premier mode de secours à carburant liquide (421) qui comprend l'injection de carburant liquide dans ledit cylindre dudit moteur diesel via ledit premier injecteur de carburant liquide (301), et
- le procédé comprend le fait d'effectuer un transfert (441) dudit premier mode de secours à carburant liquide (421) vers ledit mode de secours à carburant gazeux (423).

4. Procédé selon la revendication 3, comprenant :
- en réponse à une défaillance de l'injection de carburant gazeux dans ledit cylindre pendant ledit mode de secours à carburant gazeux (423), le passage (442) audit premier mode de secours à carburant liquide (421).

5. Procédé selon l'une quelconque des revendications précédentes, comprenant :
- le fait d'effectuer un transfert (411) vers ledit mode carburant gazeux (402) à partir d'un mode carburant liquide (401), qui comprend l'injection de carburant liquide dans ledit cylindre via à la fois ledit premier injecteur de carburant liquide (301) et ledit second injecteur de carburant liquide (302).

6. Procédé selon la revendication 5, dans lequel une récupération d'un mode de secours à carburant gazeux (423) ou un mode de secours à carburant liquide (421, 422) vers le mode carburant gazeux à lieu via ledit mode carburant liquide (401).

7. Procédé selon la revendication 5 ou 6, comprenant :
- en réponse à une défaillance de l'injection de carburant gazeux dans ledit cylindre pendant ledit mode carburant gazeux (402), le passage (412) audit mode carburant liquide (401).

8. Système de commande d'injection de carburant pour un moteur diesel bicarburant, comprenant :
- un premier système de commande électrique (311) configuré pour commander le fonctionnement d'un premier injecteur de carburant liquide (301), et
- un second système de commande électrique (312) configuré pour commander le fonctionnement d'un second injecteur de carburant liquide (302) ;
dans lequel lesdits premier (311) et second (312) systèmes de commande électrique sont tous deux configurés pour effectuer sélectivement une injection pilote via l'injecteur de carburant liquide respectif (301, 302) dans le même cylindre pendant le fonctionnement dudit moteur diesel dans un mode bicarburant (402, 423) qui comprend l'injection de carburant gazeux audit cylindre,
**caractérisé en ce que** lesdits premier (311) et second (312) systèmes de commande électrique sont des systèmes de commande électrique mutuellement redondants qui sont fonctionnellement indépendants l'un de l'autre.

9. Système de commande d'injection de carburant selon la revendication 8, dans lequel ledit second système de commande électrique (312) est également configuré pour commander le fonctionnement d'un injecteur de carburant gazeux (303) pendant le fonctionnement dudit moteur diesel dans ledit mode bicarburant (402, 423).

10. Système d'injection de carburant pour un moteur diesel bicarburant, comprenant :
- un premier injecteur de carburant liquide (301) et un second injecteur de carburant liquide (302), tous deux configurés pour injecter du carburant liquide dans le même cylindre,
- un injecteur de carburant gazeux (303) configuré pour injecter du carburant gazeux dans le même cylindre que lesdits premier (301) et second (302) injecteurs de carburant liquide, et
- un système de commande d'injection de carburant selon l'une quelconque des revendications 8 ou 9, couplé pour commander lesdits premier (301) et second (302) injecteurs de carburant liquide et ledit injecteur de carburant gazeux (303).
